# EUROPÄISCHE PATENTSCHRIFT

(11) **EP 4 286 728 B1**
(45) Veröffentlichungstag und Bekanntmachung des Hinweises auf die Patenterteilung: **01.05.2024**
(21) Anmeldenummer: 22176922.7
(22) Anmeldetag: 02.06.2022
(51) Int. Cl.: F16L 37/091

(54) **STECKEINSATZ**
INSERT
INSERT ENFICHABLE

(43) Veröffentlichungstag der Anmeldung: 06.12.2023
(73) Patentinhaber: AVS, Ingenieur J.C. Römer GmbH, 94481 Grafenau (DE)
(72) Erfinder: Silberbauer, Günther, 94481 Grafenau (DE)
(74) Vertreter: Wolf, Gerhard

(56) Entgegenhaltungen:
- WO-A1-2006/105849
- CN-A- 1 727 742
- DE-A1- 10 162 658
- DE-B4- 19 803 918
- DE-T5-112013 003 524

## Beschreibung

Die Erfindung betrifft einen Steckeinsatz.

Steckeinsätze zur lösbaren Kopplung eines rohrförmigen Elements, beispielsweise eines Schlauchs, mit einem Grundkörper, beispielsweise einem Gehäuse einer Schlauchkupplung, eines Ventils, eines Sensors, einer Pumpe etc. sind bekannt, beispielsweise aus der anmeldereigenen Druckschrift DE 10 2018 121 440 A1.

Der bekannte Steckeinsatz weist eine in axialer Richtung gesehen zweiteilige Steckhülse bestehend aus einer Einpresshülse und einem Stützring, ein in der Steckhülse angeordnetes Fixierelement als Krallenring und ein Löseorgan auf, das mit dem Fixierelement derart zusammenwirkt, dass beim Eindrücken des Löseorgans in die Steckhülse die Krallen des Fixierelements deformiert werden und damit das rohrförmige Element aus dem Grundkörper herausgezogen werden kann.

Ein wesentlicher Nachteil des bekannten Steckeinsatzes besteht darin, dass die Herstellung und das Zusammenfügen der Einzelteile des Steckeinsatzes sehr aufwendig ist. Bislang muss die Steckhülse bzw. deren Einzelteile mittels spanender Bearbeitung hergestellt und anschließend zusammengesetzt werden.

Druckschrift DE 11 2013 003 524 T5 offenbart eine Rohrkupplung. In einen Kunststoffkörper ist ein Führungselement eingebracht, in dem eine Klemme zur Fixierung eines Rohrs gehalten ist.

Die Druckschrift DE 198 03 918 B4 offenbart eine Anschlussvorrichtung für Rohrleitungen.

Ausgehend hiervon ist es Aufgabe der Erfindung, einen Steckeinsatz anzugeben, bei dem der Herstellungs- und Montageaufwand reduziert ist, so dass die Herstellungskosten gesenkt werden können.

Die Aufgabe wird durch einen Steckeinsatz mit den Merkmalen des unabhängigen Patentanspruchs 1 gelöst. Bevorzugte Ausführungsformen sind Gegenstand der Unteransprüche.

Gemäß einem ersten Aspekt wird ein Steckeinsatz offenbart. Der Steckeinsatz ist ausgebildet zur Einbringung in einen Grundkörper und dient der lösbaren Kopplung eines rohrförmigen Elements mit dem Grundkörper. Der Steckeinsatz weist eine Steckhülse, ein Fixierelement und ein Löseorgan auf. Das Fixierelement ist zur lösbaren Fixierung eines über eine Einführöffnung eingeschobenen, rohrförmigen Elements in der Steckhülse ausgebildet. Das Löseorgan wirkt mit dem Fixierelement derart zusammen, dass durch eine axiale Verschiebung des Löseorgans relativ zur Steckhülse die Fixierung des rohrförmigen Elements gelöst wird. Die Steckhülse umfasst einen Hülsenabschnitt, der aus zumindest einem Wandungselement gebildet ist. Das Wandungselement ist durch Stanzen und Biegen eines metallischen Flachmaterialabschnitts zu einem schalenartigen oder umfangsseitig geschlossenen Element gebildet. Gemäß einer ersten Alternative sind einstückig mit der Steckhülse gebildete Fixiermittel zur Fixierung der Steckhülse in dem Grundkörper vorgesehen. Die Fixiermittel sind zur Fixierung des Steckeinsatzes in dem Grundkörper vorgesehen. Die Fixiermittel werden durch mehrere an der Steckhülse umfangsseitig verteilt angeordnete Krallen oder Klinken oder durch zumindest eine Rippe gebildet. Gemäß einer zweiten Alternative ist die Steckhülse dazu ausgebildet, durch Umformen eines Randbereichs des Grundkörpers im Grundkörper fixiert zu werden.

Der technische Vorteil des Steckeinsatzes besteht darin, dass dessen Steckhülse durch Stanz-Biege-Umformtechnik mit reduziertem Aufwand und damit kostengünstig herstellbar ist. Zudem wird mittels der Fixierung des Steckeinsatzes im Grundkörper eine sichere Verankerung des Steckeinsatzes in dem Grundkörper erreicht.

Gemäß einem Ausführungsbeispiel weist die Steckhülse an einem der Einführöffnung gegenüberliegenden zweiten freien Ende einen Flansch zur Ausbildung einer Anlagefläche für ein Dichtelement auf, mittels dem der Übergang zwischen dem rohrförmigen Element und dem Grundkörper abgedichtet wird. Durch die flächige Anlage des Dichtelements an dem Flansch wird das Dichtelement durch den Steckeinsatz in Position gehalten.

Gemäß einem Ausführungsbeispiel sind die Krallen, mittels denen der Steckeinsatz im Grundkörper fixiert wird, im Bereich des Flanschs vorgesehen. Durch das Vorsehen der Krallen im Bereich des Flansches kann die Höhe des Steckeinsatzes reduziert werden. Zudem ermöglicht die Verwendung von Krallen ein Eindrücken des Steckeinsatzes mit geringerem Kraftaufwand im Vergleich zu einem durch Pressfügen im Grundkörper gehaltenen Steckeinsatz.

Die Krallen können schräg nach oben in Richtung der Einführöffnung abstehen und beispielsweise dazu ausgebildet sein, sich im Grundkörper, insbesondere in einer Sicke des Grundkörpers, zu verhaken, um ein Herauslösen des Steckeinsatzes aus dem Grundkörper wirksam zu vermeiden. Es sei jedoch erwähnt, dass ein Verhaken der Krallen in einem Grundkörper, der aus Kunststoff gebildet ist, auch ohne Sicke bzw. ohne eine Nut in der Wandung des Grundkörpers möglich ist. In diesem Fall werden die Krallen direkt in die nut- bzw. Sickenfreie Wandung des Grundkörpers eingedrückt.

Gemäß einem Ausführungsbeispiel umfasst der Flansch mehrere Flanschsegmente, die bezogen auf eine Längsachse des Steckeinsatzes radial nach außen abstehen und in Umfangsrichtung zueinander beabstandet angeordnet sind. Die Krallen sind umfangsseitig verteilt in den sich zwischen den Flanschsegmenten bildenden Zwischenräumen vorgesehen, und zwar jeweils eine oder mehrere Krallen in einem sich zwischen zwei aufeinanderfolgenden Flanschsegmenten bildenden Zwischenraum. Damit können erste Bereiche des Flachmaterials, die im Bereich des zweiten freien Endes des Steckeinsatzes vorgesehen sind, zur Ausbildung des Flansches und zweite Bereiche des Flachmaterials, die ebenfalls im Bereich des zweiten freien Endes des Steckeinsatzes vorgesehen sind, zur Ausbildung der Krallen verwendet werden. Durch die Flanschsegmente kann zudem eine Zentrierung des freien Endes der Steckhülse in dem Grundkörper erreicht werden.

Gemäß einem Ausführungsbeispiel weist die Steckhülse eine Sicke auf, in der das Fixierelement randseitig gehalten ist. Dadurch kann das Fixierelement, das beispielswiese ein separates ringförmiges Element ist, in der Steckhülse formschlüssig gehalten werden.

Gemäß einem Ausführungsbeispiel ist das Fixierelement randseitig in einer Sicke des Hülsenabschnitts der Steckhülse fixiert. In anderen Worten bildet die Sicke des Hülsenabschnitts eine vorzugsweise umlaufende Ausbuchtung, in die der Rand des Fixierelements eingesetzt und damit formschlüssig in der Sicke gehalten wird. In diesem Fall kann das Fixierelement beim Zusammenbiegen des den Hülsenabschnitt bildenden Wandungselements oder beim Zusammensetzen des aus mehreren Wandungselementen bestehenden Hülsenabschnitts in die Steckhülse eingebracht werden. Alternativ ist das Fixierelement in den Hülsenabschnitt axial eindrückbar und mittels eines Schnappmechanismus in der Steckhülse gehalten. Damit kann das Fixierelement nach der Bildung des umfangsseitig geschlossenen Hülsenabschnitts in die Steckhülse eingebracht werden.

Gemäß einem Ausführungsbeispiel bildet der Außenwandabschnitt der Steckhülse im Bereich der Sicke, in der das Fixierelement gehalten wird, die zumindest eine Rippe oder der Außenwandabschnitt weist die Rippe auf. Durch die zumindest eine Rippe kann der Steckeinsatz in dem Grundkörper durch Einpressen fixiert werden.

Gemäß einem Ausführungsbeispiel sind die Klinken, mittels denen die Verankerung der Steckhülse in dem Grundkörper erfolgt, in einem Wandungsabschnitt der Steckhülse zwischen einem ersten freien Ende der Steckhülse, das im Bereich der Einschuböffnung vorgesehen ist, und dem Fixierelement vorgesehen. Die Klinken werden durch bereichsweise freigestanzte und radial schräg nach außen vorstehende Materialabschnitte der Steckhülse gebildet. Mit dieser Art der Fixierung kann der Steckeinsatz im Bereich oberhalb des Fixierelements, d.h. im Bereich der Einschuböffnung, in dem Grundkörper gesichert werden.

Gemäß einem Ausführungsbeispiel wird der Hülsenabschnitt durch ein einziges gestanztes, umgeformtes und zu einem umfangsseitig geschlossenen Element zusammengebogenes Flachmaterialstück gebildet. Damit kann der Hülsenabschnitt durch ein einziges Flachmaterialstück durch einen mehrstufigen Stanz-Biege-Umform-Prozess hergestellt werden. Durch den Stanz-Umform-Prozess wird insbesondere erreicht, dass zwei zunächst voneinander beabstandete Längsseiten des Flachmaterialstücks zueinander orientiert zu liegen kommen und aneinanderstoßen. Die Längsseiten des Flachmaterialstücks können an dem sich ausbildenden Stoß relativ zueinander fixiert sein, beispielsweise durch eine formschlüssige und/oder stoffschlüssige Verbindung, insbesondere durch eine Verschweißung.

Gemäß einem Ausführungsbeispiel umfasst der Hülsenabschnitt zumindest zwei gestanzte, umgeformte und schalenförmig gebogene Flachmaterialstücke als Wandungselemente, die zu einem umfangsseitig geschlossenen Hülsenabschnitt zusammengefügt sind. In anderen Worten werden zeitlich parallel oder nacheinander mehrere schalenförmige Wandungselemente in einem Stanz-Biege-Umformprozess hergestellt. Die schalenförmigen Wandungselemente weisen außenseitig eine konvexe Form auf. Durch das Zusammensetzen der Wandungselemente derart, dass eine Längsseite des einen Wandungselements an der Längsseite des nächsten Wandungselements anliegt, wird ein umfangsseitig segmentierter Hülsenabschnitt gebildet. Die gegeneinander anliegenden Längsseiten können beispielsweise punktuell verschweißt sein. Vorzugsweise wird der Hülsenabschnitt aus zwei halbschalenförmigen Wandungselementen gebildet. Durch die umfangsseitige Segmentierung des Hülsenabschnitts kann der Hülsenabschnitt trotz komplexer Umformungsprozesse mittels eines Stanz-Biege-Prozesses gefertigt werden.

Gemäß einem Ausführungsbeispiel weist die Steckhülse an einem ersten freien Ende, an dem die Einführöffnung für das rohrförmige Element vorgesehen ist, einen Kragenabschnitt auf, der durch ein randseitiges Umbiegen des metallischen Flachmaterials des Wandungselements oder durch ein separates Kragenelement gebildet ist. Der Kragenabschnitt kann damit entweder einstückig am Wandungselement ausgebildet sein oder es kann ein separates Kragenelement auf den Hülsenabschnitt aufgebracht werden. Der Kragenabschnitt bzw. das Kragenelement sind dazu ausgebildet, eine ringförmige, den Hülsenabschnitt umfangsseitig umgebende Lücke zwischen dem Hülsenabschnitt und dem Grundkörper zu überdecken.

Gemäß einem Ausführungsbeispiel ist das Kragenelement ein ringartig ausgebildetes Element aus einem Flachmaterial, das einen von einer Oberseite winklig abstehenden, außenumfangsseitig geschlossenen Wandungsabschnitt aufweist. Damit kann das Kragenelement ebenfalls aus einem Flachmaterial gebildet werden, beispielsweise durch Tiefziehen oder ein sonstiges Umformverfahren.

Gemäß einem Ausführungsbeispiel weist das Kragenelement innenumfangsseitig mehrere Anschlagsabschnitte zur Begrenzung des axialen Verschiebewegs des Löseorgans auf. Das Löseorgan kann außenumfangsseitig einen Vorsprung bzw. eine Schulter aufweisen, der/die mit den Anschlagsabschnitten zusammenwirkt, um den axialen Verschiebeweg zu begrenzen. Damit kann durch das Kragenelement ein unerwünschtes Herauslösen des Löseorgans aus der Steckhülse verhindert werden.

Gemäß einem Ausführungsbeispiel ist das Kragenelement freiendseitig auf den Hülsenabschnitt der Steckhülse aufgesteckt und kraftschlüssig und/oder stoffschlüssig mit diesem verbunden. Auch kann das Kragenelement dazu ausgebildet sein, zumindest partiell die Wandung des Hülsenabschnitts freiendseitig zu übergreifen. Dadurch kann das Kragenelement an dem Hülsenabschnitt fixiert werden. Zugleich kann mittels des Kragenelements die Stabilität der Steckhülse verbessert werden.

Gemäß einem Ausführungsbeispiel weist das Kragenelement außenumfangsseitig eine Schrägfläche oder eine Schulter auf, die dazu ausgebildet ist, zur Fixierung des Steckeinsatzes im Grundkörper von einem umgeformten Randbereich des Grundkörpers umgriffen zu werden. Durch das abschnittsweise Übergreifen des Kragenelements kann eine sichere Fixierung des Steckeinsatzes im Grundkörper erreicht werden.

Gemäß einem Ausführungsbeispiel ist das Fixierelement ein in der Steckhülse fixierter, scheibenförmiger Krallenring, der innenumfangsseitig eine Vielzahl von reversibel verbiegbaren Krallen zur Fixierung des rohrförmigen Elements aufweist. Die Krallen weisen ohne ein in den Krallenring eingeschobenes, ringförmiges Element radial oder im Wesentlichen radial nach innen und werden beim Einschieben eines rohrförmigen Elements in den Krallenring in Einschieberichtung verformt, so dass die Krallen freiendseitig in die Wandung des rohrförmigen Elements eingreifen und dadurch ein Herausschieben des rohrförmigen Elements entgegen der Einschieberichtung verhindern.

Gemäß einem Ausführungsbeispiel weist das Fixierelement im Übergangsbereich zwischen einem ringförmigen Abschnitt des Krallenrings und den Krallen eine Wölbung auf, deren konvexe Seite in Richtung der Einführöffnung orientiert ist. Die Wölbung kann umlaufend vorgesehen sein. Durch die Wölbung kann beim Einschieben des Löseorgans ein Umschnappen des Fixierelements erreicht werden, was vorteilhaft für die Haptik und die Bedienung des Löseorgans ist.

Gemäß einem Ausführungsbeispiel ist der Hülsenabschnitt zwischen einem Mittenbereich, in dem das Fixierelement gehalten ist, und einem der Einschuböffnung gegenüberliegenden zweiten freien Ende der Steckhülse trichterförmig zulaufend ausgebildet. Dadurch verjüngt sich der Hülsenabschnitt zum zweiten freien Ende hin, um dort eine Anlagefläche für ein Dichtelement ausbilden zu können. Zudem kann durch das trichterförmige Zulaufen des Hülsenabschnitts eine laterale Führung des rohrförmigen Elements erreicht werden, um dieses zentriert in das Dichtelement einführen zu können.

Gemäß einem Ausführungsbeispiel ist die Steckhülse aus einem Edelstahl-Bandmaterial gefertigt. Dadurch kann der Steckeinsatz für Lebensmittelanwendungen verwendet und aufgrund des reduzierten Materialeinsatzes eine hohe Kosteneinsparung erzielt werden. Alternativ zu Edelstahl können auch andere Werkstoffe verwendet werden, beispielsweise Messing, Bronze oder Aluminium.

Gemäß einem Ausführungsbeispiel weist das Löseorgan außenseitig Haken auf, die in Ausnehmungen der Steckhülse eingreifen und eine Schiebebewegung des Löseelements vom Fixierelement weg begrenzen Alternativ kann das Löseorgan Ausnehmungen aufweisen, in die innenumfangsseitig vorgesehene Vorsprünge der Steckhülse eingreifen, um eine Schiebebewegung des Löseorgans vom Fixierelement weg zu begrenzen.

Vorzugsweise ist der Steckeinsatz für Dauerdrücke bis zu 20 bar und Druckspitzen bis zu 100 bar ausgebildet.

Der Steckeinsatz kann beispielsweise für Außendurchmesser des rohrförmigen Elements im Bereich zwischen 2mm und 40mm ausgebildet sein, insbesondere im Bereich von 4mm bis 32mm.

Unter "Stanz-Biege-Verfahren" im Sinne der vorliegenden Offenbarung wird ein Umformverfahren verstanden, bei dem ein metallisches Stanzteil, durch Biegen, Prägen und oder Tiefziehen gezielt umgeformt wird.

Unter "Metall" im Sinne der vorliegenden Offenbarung wird ein reines Metall oder eine Legierung umfassend mehrere unterschiedliche Metalle verstanden.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand mehrerer Figuren an Ausführungsbeispielen näher erläutert. Es zeigen:
- Fig. 1: beispielhaft eine Längsschnittdarstellung eines ersten Ausführungsbeispiels eines Steckeinsatzes;
- Fig. 2: beispielhaft eine Längsschnitt-Explosionsdarstellung des in Figur 1 gezeigten ersten Ausführungsbeispiels eines Steckeinsatzes;
- Fig. 3: beispielhaft eine Längsschnittdarstellung eines zweiten Ausführungsbeispiels eines Steckeinsatzes;
- Fig. 4: beispielhaft eine Längsschnittdarstellung eines dritten Ausführungsbeispiels eines Steckeinsatzes;
- Fig. 5: beispielhaft eine Längsschnittdarstellung eines vierten Ausführungsbeispiels eines Steckeinsatzes;
- Fig. 6: beispielhaft eine Längsschnittdarstellung eines fünften Ausführungsbeispiels eines Steckeinsatzes;
- Fig. 7: beispielhaft und schematisch die Bildung einer Steckhülse eines Steckeinsatzes durch umfangsseitiges Zusammenbiegen eines durch Stanz-Biege-Umformtechnik hergestellten Materialstücks;
- Fig. 8: beispielhaft eine Längsschnittdarstellung eines sechsten Ausführungsbeispiels eines Steckeinsatzes, der durch einen umgebördelten Randbereich des Grundkörpers in diesem fixiert ist;
- Fig. 9: beispielhaft eine Längsschnittdarstellung eines siebten Ausführungsbeispiels eines Steckeinsatzes, der durch einen umgebördelten Randbereich des Grundkörpers in diesem fixiert ist; und
- Fig. 10: beispielhaft eine Längsschnittdarstellung eines achten Ausführungsbeispiels eines Steckeinsatzes, der durch einen umgebördelten Randbereich des Grundkörpers in diesem fixiert ist.

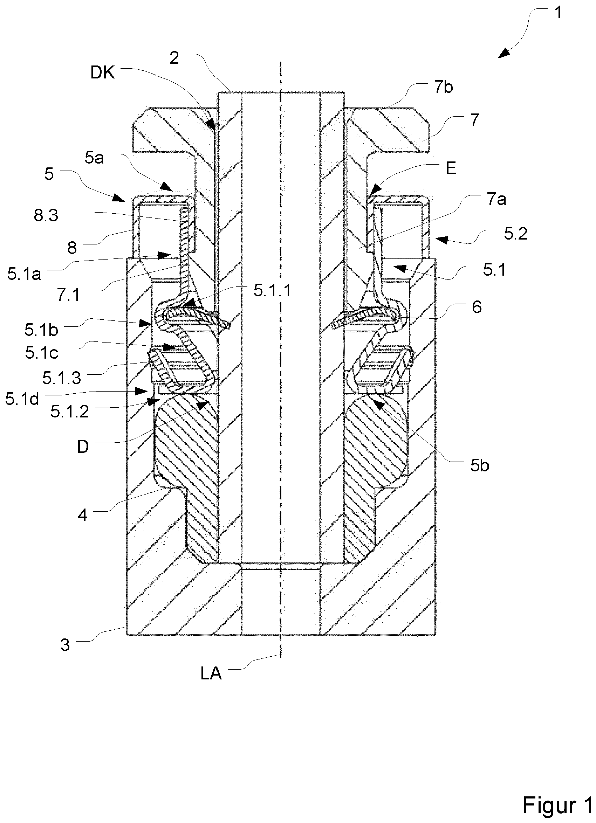

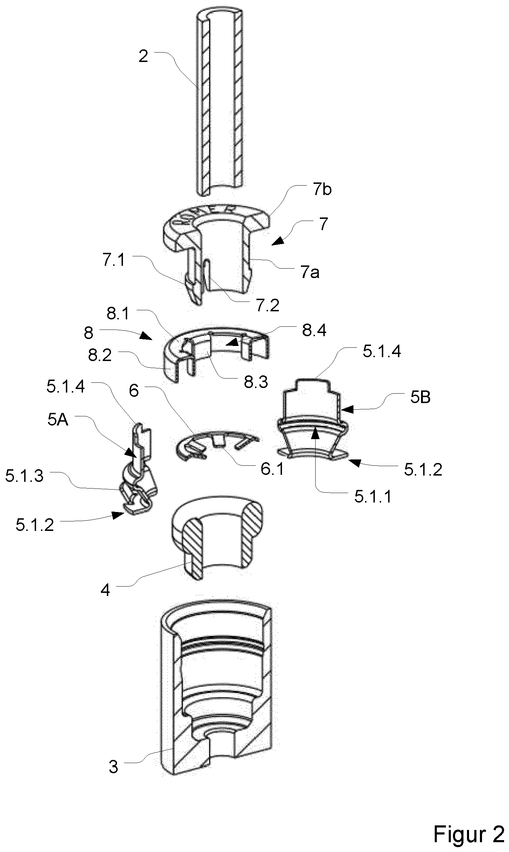

Figuren 1 und 2 zeigen ein erstes Ausführungsbeispiel eines Steckeinsatzes 1. Der Steckeinsatz 1 dient der lösbaren Fixierung eines rohrförmigen Elements 2 innerhalb eines Grundkörpers 3. Das rohrförmige Element 2 kann beispielsweise ein Schlauch oder ein Rohr mit kreisrundem Querschnitt sein. Der Grundkörper 3 kann beispielsweise ein Gehäuse einer Schlauchkupplung, eines Ventils, eines Verteilers, eines Sensors, einer Pumpe etc. sein.

Der Steckeinsatz 1 bildet ein Kopplungsstück zwischen dem rohrförmigen Element 2 und dem Grundkörper 3. Er ist dazu ausgebildet, in eine Öffnung des Grundkörpers 3 eingefügt zu werden. Im Inneren des Steckeinsatzes 1 ist ein Aufnahmeraum ausgebildet, in den ein freies Ende des rohrförmigen Elements 2 einfügbar und fixierbar ist, so dass durch die Fixierung des Steckeinsatzes 1 im Grundkörper 3 und die Fixierung des rohrförmigen Elements 2 in dem Steckeinsatz 1 das rohrförmige Element 2 im Grundkörper 3 lösbar gehalten wird. Zur Abdichtung des Übergangs zwischen dem rohrförmigen Element 2 und dem Grundkörper 3 ist ein Dichtelement 4 vorgesehen. Das Dichtelement 4 kann, wie in Fig. 1 und 2 gezeigt, als Elastomer-Formteil ausgebildet sein oder beispielsweise auch ein O-Ring sein.

Der Steckeinsatz 1 umfasst eine Steckhülse 5, ein Fixierelement 6 und ein Löseorgan 7. Die Steckhülse 5 ist hohlkörperartig ausgebildet und bildet zumindest abschnittsweise die umfangsseitige Wandung des Steckeinsatzes 1 aus. Die Steckhülse 5 weist an einem ersten freien Ende 5a eine Einführöffnung E auf, über die das rohrförmige Element 2 in den Steckeinsatz 1 einführbar ist. An die Einführöffnung E anschließend ist im Inneren der Steckhülse 5 ein Durchführkanal DK gebildet, in den das rohrförmige Element 2 einschiebbar ist.

Im Inneren der Steckhülse 5 ist das Fixierelement 6 aufgenommen. Das Fixierelement 6 ist dazu ausgebildet, das rohrförmige Element 2 in axialer Richtung im Steckeinsatz 1 zu verankern. Im gezeigten Ausführungsbeispiel ist das Fixierelement 6 ein ringartiges Element. Außenumfangsseitig ist das Fixierelement 6 in der Steckhülse 5 durch einen Formschluss fixiert. In der gezeigten Ausführungsform taucht der außenumfangsseitig vorgesehene Randbereich des Fixierelements 6 in eine innenumfangsseitig vorgesehene Sicke 5.1.1 der Steckhülse 5 ein, wodurch das Fixierelement 6 in axialer Richtung in der Steckhülse 5 gehalten ist.

Das Fixierelement 6 weist am innenliegenden Rand mehrere Krallen 6.1 auf. In anderen Worten ist das Fixierelement 6 als Krallenring ausgebildet.

Die Krallen 6.1 sind um eine Durchführöffnung des Fixierelements 6 angeordnet. Der Durchmesser der Durchführöffnung ist kleiner als der Außendurchmesser des rohrförmigen Elements 2, so dass die Krallen 6.1 beim Einschieben des rohrförmigen Elements 2 in Einführrichtung verformt werden und nach Erreichen einer finalen Einschubposition in der Wandung des rohrförmigen Elements 2 eingreifen. Dadurch bewirkt das Fixierelement 6, dass sich das rohrförmige Element 2 nicht in unerwünschter Weise aus dem Steckeinsatz 1 herauslösen kann.

Das Löseorgan 7 ist dazu ausgebildet, das Eingreifen der Krallen 6.1 des Fixierelements 6 in das rohrförmige Element 2 zu lösen, so dass das rohrförmige Element 2 wieder aus dem Steckeinsatz 1 herausgezogen werden kann. Das Löseorgan 7 ist vorzugsweise hülsenförmig ausgebildet und weist im Inneren einen Durchführkanal auf, durch den das rohrförmige Element 2 hindurchschiebbar ist.

Das Löseorgan 7 ist über die Einführöffnung E in die Steckhülse 5 eingeschoben. Das in der Steckhülse 5 liegende freie Ende des Löseorgans 7 ist zum Zusammenwirken mit den Krallen 6.1 des Fixierelements 6 ausgebildet, und zwar derart, dass das freie Ende des Löseorgans 7 bei dem axialen Einschieben des Löseorgans 7 die Krallen 6.1 in Einschieberichtung nach unten drückt und dadurch das Eingreifen der Krallen 6.1 in die Wandung des rohrförmigen Elements 2 aufgehoben wird.

Die Steckhülse 5 weist einen Hülsenabschnitt 5.1 und einen Kragenabschnitt 5.2 auf. Der Hülsenabschnitt 5.1 bildet die Wandung der Steckhülse 5 aus und umschließt umfangsseitig einen Durchführkanal DK. Der Hülsenabschnitt 5.1 ist in einem ersten Bereich 5.1a, der unmittelbar an das erste freie Ende 5a anschließt, rundrohrartig ausgebildet.

An den ersten Bereich 5.1a schließt sich der zweite Bereich 5.1b an, an dem durch Prägen des Flachmaterials innenumfangsseitig die Sicke 5.1.1 gebildet ist. In diese Sicke 5.1.1 ist das Fixierelement 6 mit dessen äußeren Rand aufgenommen und damit formschlüssig in dem Hülsenabschnitt 5.1 fixiert.

An den zweiten Bereich 5.1b schießt sich in Richtung des zweiten freien Endes 5b hin ein dritter Bereich 5.1c an, in dem der Hülsenabschnitt 5.1 in Richtung zum zweiten freien Ende 5b hin konisch zulaufend ausgebildet ist. In anderen Worten ist die Wandung des Hülsenabschnitts 5.1 im dritten Bereich 5.1c trichterförmig zulaufend ausgebildet. Dadurch wird das eingeschobene rohrförmige Element 2 zentriert und damit lagerichtig der am zweiten freien Ende 5b ausgebildeten Durchführöffnung D zugeführt.

Am zweiten freien Ende 5b der Steckhülse 5 ist ein vierter Bereich 5.1d des Hülsenabschnitts 5.1 vorgesehen, an dem ein Flansch 5.1.2 ausgebildet ist. Der Flansch 5.1.2 wird beispielsweise durch einen oder mehrere radial nach außen abstehende, eben ausgebildete Flachmaterialabschnitte gebildet. Der Flansch 5.1.2 kommt dabei in einer Ebene zu liegen, die senkrecht zur Längsachse LA des Steckeinsatzes 1 verläuft.

Der Flansch 5.1.2 kann kreisringförmig ausgebildet sein oder mehrere kreisringsegmentförmig ausgebildete Flanschsegmente aufweisen. Der Flansch 5.1.2 bildet eine Anlagefläche für das Dichtelement 4, das den Übergang zwischen rohrförmigen Element 2 und Grundkörper 3 abdichtet. Damit kann das Dichtelement 4 durch den Steckeinsatz 1 in Position gehalten werden. Zudem weist der Flansch 5.1.2 in radialer Richtung eine Größe und Umfangsform auf, die an die im Grundkörper 3 gebildete Ausnehmung, in die der Steckeinsatz 1 eingesetzt wird, angepasst ist, und zwar derart, dass der Steckeinsatz 1 durch den Flansch 5.1.2 im Grundkörper 3 zentriert wird.

Das Ausführungsbeispiel gemäß den Figuren 1 und 2 zeigt eine erste Möglichkeit der Fixierung des Steckeinsatzes 1 in dem Grundkörper 3. Zu dieser Fixierung sind im Bereich des zweiten freien Endes 5b Krallen 5.1.3 ausgebildet. Die Krallen 5.1.3 sind durch einstückig am Hülsenabschnitt 5.1 ausgebildete Laschen gebildet, die in Bezug auf die Längsachse LA schräg nach oben abstehen und dazu ausgebildet sind, nach dem Einsetzen des Steckeinsatzes 1 in eine Ausnehmung des Grundkörpers 3 den Steckeinsatz 1 in dieser Ausnehmung zu verankern und damit ein unerwünschtes Herauslösen (beispielsweise durch ein im rohrförmigen Element 2 aufgenommenes, unter Druck stehendes Fluid) des Steckeinsatzes 1 aus dem Grundkörper 3 zu verhindern. Die Krallen 5.1.3 können dabei in eine in der Ausnehmung des Grundkörpers 3 vorgesehene Nut eingreifen. Alternativ können die Krallen 5.1.3 dazu ausgebildet sein, eine Verankerung des Steckeisatzes 1 in der glatten Wandung der Ausnehmung des Grundkörpers 3 (d.h. nutfreie Ausnehmung) zu bewirken.

Im gezeigten Ausführungsbeispiel sind am zweiten freien Ende 5b des Steckeinsatzes 1 mehrere Krallen 5.1.3 umfangsseitig verteilt und beabstandet zueinander angeordnet. Je nach Durchmesser des Steckeisatzes können beispielsweise vier, sechs oder mehr Krallen 5.1.3 vorgesehen sein. Zwischen einem Paar von Krallen 5.1.3 ist vorzugsweise ein Flanschsegment des Flansches 5.1.2 vorgesehen. Dieses Flanschsegment kann vorzugsweise kreisringsegmentförmig ausgebildet sein, d.h. erstreckt sich lediglich über einen begrenzten Winkelbereich. Durch die Flanschsegmente wird beispielsweise eine Zentrierung des Steckeinsatzes 1 in dem Grundkörper 3 erreicht. Vorzugsweise bildet, wie in Fig. 1 zu erkennen, ein Fußbereich der Kralle 5.1.3 einen Anlagebereich für das Dichtelement 4 aus, so dass die Fußbereiche der Krallen 5.1.3 zusammen mit den Flanschsegmenten, die zwischen den Krallen 5.1.3 liegen, gemeinsam die Anlagefläche für das Dichtelement 4 bilden.

Die Krallen 5.1.3 schließen vorzugsweise mit der Längsachse LA des Steckeinsatzes 1 einen spitzen Winkel ein, der sich in Richtung der Einführöffnung E öffnet. Der Winkel weist vorzugsweise einen Wert zwischen 20° und 45°, insbesondere zwischen 25° und 35°, besonders bevorzugt 30° oder im Wesentlichen 30° auf.

Der Hülsenabschnitt 5.1 ist mittels Stanz-Biege-Umformtechnik aus einem oder mehreren metallischen Flachmaterialstücken hergestellt. Das zumindest eine Flachmaterialstück wird dabei zunächst gestanzt. Anschließend wird eine Materialumformung des zumindest einen Flachmaterialstücks vorgenommen, beispielsweise in dem die Sicke 5.1.1 durch einen Prägevorgang gebildet wird und/oder der Flansch 5.1.2 und die Krallen 5.1.3 durch Biegen hergestellt werden.

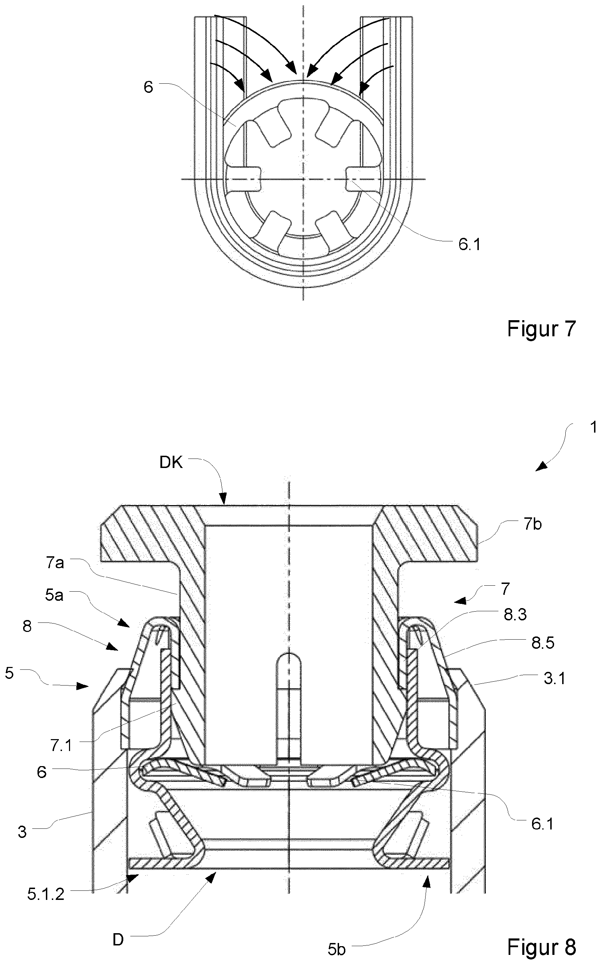

Im Falle eines einzigen Materialstücks, das den Hülsenabschnitt 5.1 bildet, wird dieses zuvor gestanzte und umgeformte Materialstück anschließend zu einem rohrartigen Körper zusammengebogen, so dass die Längsseiten des Materialstücks zueinander orientiert sind und vorzugsweise aneinander anliegen, so dass sich ein Stoß bildet. Das Zusammenbiegen eines gestanzten und umgeformten Materialstücks zu einer rohrförmigen Steckhülse ist in Fig. 7 schematisch dargestellt, wobei die gebogenen Pfeile den Biegeprozess veranschaulichen. An dem Stoß kann eine zumindest partielle Verschweißung erfolgen.

Für den Fall, dass der Hülsenabschnitt 5.1 durch mehrere Materialstücke gebildet wird, wie dies in Fig. 2 gezeigt ist, werden die zuvor gestanzten und umgeformten Materialstücke anschließend jeweils zu einem schalenförmigen Wandungselement 5A, 5B gebogen. Im Falle von zwei Wandungselementen sind diese halbschalenförmig ausgebildet. Diese können identisch oder auch unterschiedlich geformt sein, sind aber derart aufeinander abgestimmt ausgebildet, dass sich nach dem Zusammensetzen der schalenförmigen Wandungselemente 5A, 5B ein umfangsseitig geschlossenes Element bildet. Durch das anschließende Zusammensetzen der Wandungselemente 5A, 5B wird der Hülsenabschnitt 5.1 gebildet. Im Fall von mehr als zwei Wandungselementen 5A, 5B bilden diese jeweils einen schalenförmigen Sektor des Hülsenabschnitts 5.1, wobei durch Zusammensetzen von drei oder mehr dieser schalenförmigen Sektoren der Hülsenabschnitt 5.1 gebildet wird. Nach dem Zusammensetzen der Wandungselemente 5A, 5B kann eine zumindest partielle Verschweißung an den Stößen erfolgen. Vorzugsweise werden die Wandungselemente 5A, 5B an den Stößen im Bereich des Flansches 5.1.2 geschweißt. Alternativ oder zusätzlich ist es auch möglich, dass die Wandungselemente 5A, 5B formschlüssig zusammengehalten werden, beispielsweise mittels ineinandergreifender Schwalbenschwänze.

Wie zuvor ausgeführt, ist im Bereich des ersten freien Endes 5a der Steckhülse 5 ein Kragenabschnitt 5.2 vorgesehen. Der Kragenabschnitt 5.2 kann insbesondere eine freiendseitige, radiale Verbreiterung des Steckhülse 5 bewirken. Der Außendurchmesser des Kragenabschnitts 5.2 kann insbesondere derart gewählt sein, dass ein um den Hülsenabschnitt 5.1 außenseitig herum verlaufender kreisringförmiger Öffnungsbereich des Grundkörpers 3 durch den Kragenabschnitt 5.2 vollständig abgedeckt wird.

Im gezeigten Ausführungsbeispiel sind der Kragenabschnitt 5.2 und der Hülsenabschnitt 5.1 separat gefertigte Teile, die anschließend zusammengesetzt werden. Der Kragenabschnitt 5.2 der Stützhülse 5 kann damit als separates Kragenelement 8 aus einem Flachmaterialstück gefertigt sein, das durch Stanzen, Biegen und Tiefziehen zu einem kreisringförmigen Element umgeformt ist. Nach der Fertigung des Hülsenabschnitts 5.1 und des Kragenelements 8 wird das Kragenelement 8 auf den Hülsenabschnitt 5.1 aufgesetzt, und zwar auf das obere freie Ende, das dem Flansch 5.1.2 gegenüberliegt. Das Kragenelement 8 kann kraft- oder stoffschlüssig mit dem Hülsenabschnitt 5.1 verbunden werden. Insbesondere kann die Verbindung zwischen dem Kragenelement 8 und dem Hülsenabschnitt 5.1 durch ineinander eingreifende bzw. sich verzahnende Materialabschnitte erfolgen. Alternativ oder zusätzlich kann eine Verbindung zwischen dem Kragenelement 8 und dem Hülsenabschnitt 5.1 durch eine partielle Verschweißung erfolgen. Vorzugsweise erfolgt die Herstellung des Hülsenabschnitts 5.1 und des Kragenelements 8 zeitlich parallel auf einer gemeinsamen Stanz-BiegeMaschine, beispielsweise an zwei Prozesslinien einer Stanz-BiegeMaschine, wobei die Prozesslinien auf einander gegenüberliegenden Seiten der Maschine vorgesehen sind. Die Förderung der Flachmaterialstücke, die zur Bildung des Hülsenabschnitts 5.1 und des Kragenelements 8 benötigt werden, kann hierbei mittels zwei voneinander unabhängiger Trägerbänder erfolgen, und zwar das zumindest eine Flachmaterialstück für den Hülsenabschnitt 5.1 mittels einem ersten Trägerband und das Flachmaterialstück für das Kragenelement 8 auf einem zweiten Trägerband.

Alternativ ist es denkbar, dass der Hülsenabschnitt 5.1 und das Kragenelement 8 auf einer einzigen Prozesslinie gefertigt werden, wobei an einem einzigen Trägerband die Flachmaterialstücke, die für die Bildung des Hülsenabschnitts und des Kragenelements notwendig sind, angeordnet sind, so dass diese mittels der Bewegung des Trägerbandes gefördert werden.

Im gezeigten Ausführungsbeispiel weist der Hülsenabschnitt 5.1 an seinem dem Flansch 5.1.2 gegenüberliegenden freien Ende eine Höhenkonturierung bzw. Stufung. Das Kragenelement 8 weist innenumfangsseitig eine Konturierung auf, die an die Höhenkonturierung bzw. Stufung des Hülsenabschnitts 5.1 angepasst ist, so dass das Kragenelement 8 formschlüssig auf den Hülsenabschnitt 5.1 aufsetzbar ist. Die Konturierung des Hülsenabschnitts 5.1 kann insbesondere durch mehrere Laschen 5.1.4 gebildet werden, die parallel zur Längsachse LA nach oben hin abstehen.

Vorzugsweise ist das Kragenelement 8 kreisringartig ausgebildet und weist in ersten Abschnitten eine im Querschnitt U-förmige Kontur und in zweiten Abschnitten eine im Querschnitt L-förmige Kontur auf. Die ersten und zweiten Abschnitte sind umfangsseitig verteilt vorgesehen und wechseln sich umfangseitig ab, so dass auf einen ersten Abschnitt mit einer U-förmigen Querschnittkontur eine L-förmige Querschnittkontur und daran anschließend wieder eine U-förmige Querschnittkontur folgt usw.

Von einer Oberseite 8.1 des Kragenelements 8 steht außenumfangsseitig ein Wandungsabschnitt 8.2 ab. Durch die abwechselnde Abfolge von ersten und zweiten Abschnitten bilden sich an einer radial innenliegenden Fläche des Kragenelements 8 abwechselnd durch Paare von Anschlagsabschnitten 8.3 begrenzte Ausnehmungen 8.4 aus, in die die Laschen 5.1.4 des Hülsenabschnitts 5.1 eingreifen. Die Anschlagsabschnitte 8.3 sind derart ausgeformt, dass diese die Wandung des Hülsenabschnitts 5.1 übergreifen. Die Anschlagsabschnitte 8.3 stehen dabei radial nach innen gegenüber der Wandung des Hülsenabschnitts 5.1 vor. Durch die freien Enden der Anschlagsabschnitte 8.3 wird ein Anschlag für das Löseorgan 7 bereitgestellt, wie dies in Fig. 1 ersichtlich ist. Das Löseorgan 7 weist außenseitig einen Vorsprung 7.1, insbesondere einen hakenartigen Vorsprung auf, der gegenüber den freien Enden der Anschlagsabschnitte 8.3 zur Anlage gelangt, so dass ein Herausschieben des Löseorgans 7 aus der Steckhülse 5 verhindert wird.

Alternativ kann der Kragenabschnitt 5.2 der Steckhülse 5 einstückig mit dem Hülsenabschnitt 5.1 gefertigt sein, d.h. ein oberer Abschnitt des Flachmaterials, das zu dem Hülsenabschnitt 5.1 umgeformt wurde, ist derart bearbeitet, dass es den Kragenabschnitt 5.2 bildet. In diesem Fall können an dem Hülsenabschnitt nach innen ragende Klinken vorgesehen sein, die den Verschiebeweg des Löseorgans 7 begrenzen.

Wie insbesondere in Fig. 2 zu erkennen, kann das Löseorgan 7 zumindest zwei Längsschlitze 7.2 aufweisen. Die Längsschlitze 7.2 sind beispielsweise an dem Einschubabschnitt 7a vorgesehen, der in Hülsenabschnitt 5.1 des Steckeinsatzes 1 einschiebbar ist. Die Längsschlitze 7.2 erstrecken sich vom freien Ende des Einschubabschnitts 7a in Richtung des Kragens 7b. Durch die zumindest zwei Längsschlitze 7.2 ist der Einschubabschnitt 7a segmentiert, und zwar derart, dass sich der Einschubabschnitt 7a in radialer Richtung reversibel verjüngen kann, um durch den Kragenabschnitt 5.2, insbesondere das Kragenelement 8 hindurch eingeschoben werden zu können und anschließend nach einer radialen Expansion mittels des Vorsprungs 7.1 die Anschlagabschnitte 8.3 hintergreifen zu können.

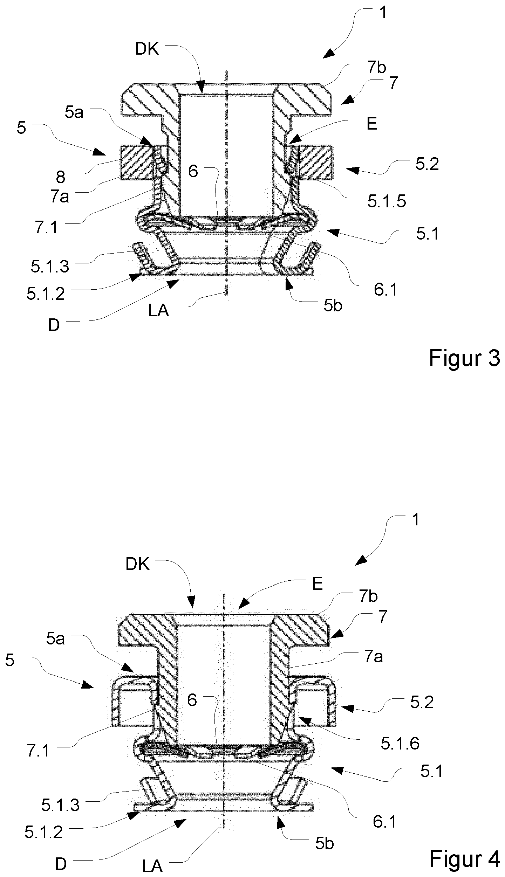

Fig. 3 zeigt ein zweites Ausführungsbeispiel des Steckeinsatzes 1. Nachfolgend werden lediglich die Unterschiede des zweiten Ausführungsbeispiels des Steckeinsatzes 1 beschrieben. Im Übrigen gelten die vorherigen Ausführungen zum ersten Ausführungsbeispiel auch für dieses zweite Ausführungsbeispiel.

Der wesentliche Unterschied des zweiten Ausführungsbeispiels zum ersten Ausführungsbeispiel besteht darin, dass das Kragenelement 8 durch einen Ring aus einem Vollmaterial gebildet ist, der beispielsweise durch Stanzen hergestellt ist. Damit weist das Kragenelement 8 im Querschnitt eine quadratische oder rechteckförmige Kontur auf, wie dies in Fig. 3 ersichtlich ist.

Das Kragenelement 8 ist außenseitig über den Hülsenabschnitt 5.1 aufgeschoben, und zwar vorzugsweise derart, dass der obere Rand des Hülsenabschnitts 5.1, der im gezeigten Ausführungsbeispiel nicht konturiert ist, d.h. keine nach oben hin abstehende Laschen aufweist, bündig mit der Oberseite 8.1 des Kragenelements 8 abschließt.

Das Kragenelement 8 kann kraft- und/oder stoffschlüssig mit dem Hülsenabschnitt 5.1 verbunden sein. So kann das Kragenelement 8 beispielsweise auf den Hülsenabschnitt 5.1 aufgepresst und/oder durch Verschweißen mit diesem verbunden sein.

Um den Verschiebeweg des Löseorgans 7 nach oben hin zu begrenzen, sind an dem Hülsenabschnitt 5.1 nach innen ragende Klinken 5.1.5 vorgesehen, die mit dem hakenartigen Vorsprung 7.1 des Löseorgans 7 zusammenwirken. Dadurch kann ein unerwünschtes Herauslösen des Löseorgans 7 aus dem Hülsenabschnitt 5.1 verhindert werden.

Fig. 4 zeigt ein drittes Ausführungsbeispiel des Steckeinsatzes 1. Nachfolgend werden lediglich die Unterschiede des dritten Ausführungsbeispiels des Steckeinsatzes 1 zum ersten bzw. zweiten Ausführungsbeispiel beschrieben. Im Übrigen gelten die vorherigen Ausführungen zum ersten bzw. zweiten Ausführungsbeispiel auch für dieses dritte Ausführungsbeispiel.

Der wesentliche Unterschied des dritten Ausführungsbeispiels zum ersten und zweiten Ausführungsbeispiel besteht darin, dass der Kragenabschnitt 5.2 nicht durch ein separates, auf den Hülsenabschnitt 5.1 aufgestecktes Kragenelement gebildet wird, sondern einstückig an dem Hülsenabschnitt 5.1 ausgebildet ist. Insbesondere kann der Kragenabschnitt 5.2 durch einen nach außen abstehenden, durch Umformen, insbesondere einen Biegeprozess hergestellten Materialabschnitt des Hülsenabschnitts 5.1 gebildet werden. Der Kragenabschnitt 5.2 kann eine senkrecht zur Längsachse des Steckeinsatzes 1 verlaufende Oberseite und einen von dieser Oberseite radial außenseitig nach unten abstehenden Wandungsabschnitt aufweisen. Auch andere Formen des Kragenabschnitts 5.2 sind möglich.

Die Begrenzung des Verschiebewegs des Löseorgans 7 nach oben hin erfolgt durch Ausnehmungen 5.1.6, die an dem Hülsenabschnitt 5.1 vorgesehen sind. Das Löseorgan 7 weist hakenartige Vorsprünge 7.1 auf, die in die Ausnehmungen 5.1.6 eingreifen. Dadurch kann ein unerwünschtes Herauslösen des Löseorgans 7 aus dem Hülsenabschnitt 5.1 verhindert werden.

In den zuvor beschriebenen Ausführungsbeispielen gemäß den Figuren 1 bis 4 wird das Fixierelement 6 in der Sicke 5.1.1 des Hülsenabschnitts 5.1 formschlüssig gehalten. Es wird bei dem umfangsseitigen Zubiegen des vorgeformten Materialabschnitts (s. Fig. 7) oder dem Zusammenfügen der Wandungselemente 5A, 5B eingebracht und nach dem Zubiegen oder Zusammenfügen in dem Hülsenabschnitt 5.1 formschlüssig fixiert.

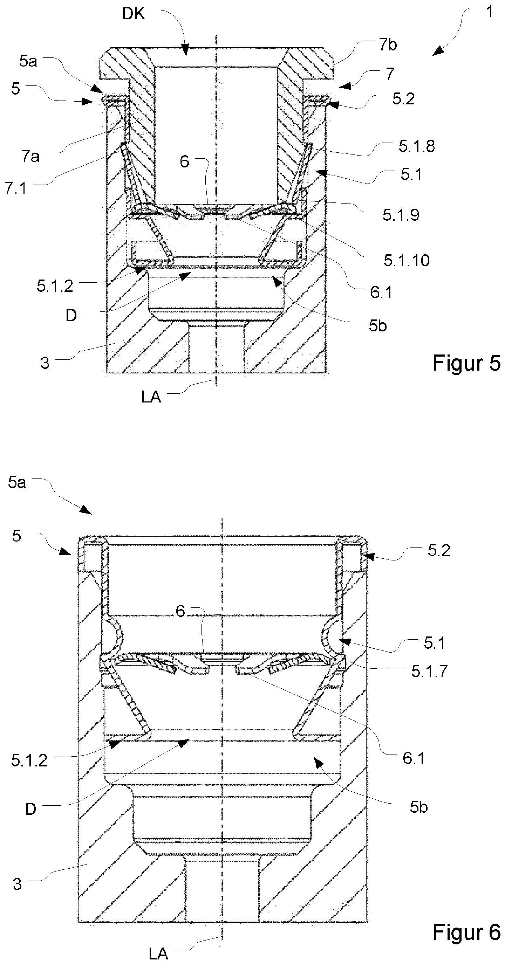

Fig. 5 zeigt eine alternative Möglichkeit der formschlüssigen Fixierung des Fixierelements 6 in der Steckhülse 5. Die Steckhülse 5 weist hierzu mehrere umfangsseitig verteilt angeordnete Arretierklinken 5.1.9 auf, die in den Innenraum der Steckhülse 5 hineinragen. Die Arretierklinken 5.1.9 sind zungenartig ausgebildet und stehen schräg in den Innenraum der Steckhülse 5 hinein, und zwar vorzugsweise derart, dass das freie Ende der Arretierklinke 5.1.9 in Richtung des zweiten freien Endes 5b der Steckhülse 5 weist.

Die Steckhülse 5 weist zudem in Einführrichtung des rohrförmigen Elements 2 unterhalb des freien Endes der Arretierklinke 5.1.9 eine Schulter 5.1.10 auf, die eine Anlagefläche für das Fixierelement 6, insbesondere den Randbereich des Fixierelements 6, bildet. Die Schulter 5.1.10 kann rechtwinklig zur Längsachse LA verlaufen oder eine freiförmige Geometrie aufweisen, beispielsweise eine Rundungen aufweisende Geometrie.

Die Steckhülse 5 ist derart ausgebildet, dass das Fixierelement 6 vom ersten freien Ende 5a her in die Steckhülse 5 einsetzbar ist, und zwar nach der Herstellung des rohrförmigen Hülsenabschnitts 5.1 (d.h. insbesondere nach dem Zubiegen oder Zusammenfügen der Wandungselemente 5A, 5B). Beim Eindrücken des Fixierelements 6 werden die Arretierklinken 5.1.9 reversibel nach außen gebogen. Nach dem Passieren der freien Enden der Arretierklinken 5.1.9 verformen sich diese in die ursprüngliche Lage zurück, so dass die Arretierklinken 5.1.9 den Rand des Fixierelements 6 hintergreifen. Die freien Enden der Arretierklinken 5.1.9 sind derart beabstandet zu der Schulter 5.1.10 angeordnet, dass das Fixierelements 6 spielfrei oder im Wesentlichen spielfrei zwischen den Arretierklinken 5.1.9 und der Schulter 5.1.10 fixiert ist.

Bei dem Ausführungsbeispiel der Fig. 5 ist zudem eine im Vergleich zu den Ausführungsbeispielen der Fig. 1 bis 4 alternative Art der Fixierung des Steckeinsatzes 1 in dem Grundkörper 3 vorgesehen.

Die Fixierung erfolgt hier über Klinken 5.1.8, die umfangsseitig verteilt an der Steckhülse 5 vorgesehen sind. Die Klinken 5.1.8 stehen außenseitig über die Außenseite der Steckhülse 5 vor. Die Klinken 5.1.8 sind zungenartig ausgebildet und stehen schräg nach außen ab, und zwar vorzugsweise derart, dass das freie Ende der Klinken 5.1.8 in Richtung des ersten freien Endes 5a der Steckhülse 5 weist. Die Klinken 5.1.8 sind, im Unterschied zu den vorher beschriebenen Ausführungsbeispielen, im oberen Bereich der Steckhülse 5 vorgesehen, insbesondere in einem Bereich zwischen der Einführöffnung E und dem Fixierelement 6. Die Klinken 5.1.8 sind derart ausgebildet, dass sich diese beim Eindrücken in den Grundkörper 3 zunächst reversibel nach innen gedrückt werden. Im Grundkörper 3 ist vorzugsweise eine Nut bzw. Hinterschneidung vorgesehen, in die die Klinken 5.1.8 eingreifen können, so dass eine Arretierung der Steckhülse 5 und damit des Steckeinsatzes 1 in dem Grundkörper 3 erreicht wird. Alternativ können die Klinken 5.1.8 dazu ausgebildet sein, in eine nut- bzw. hinterschneidungsfreie, glatte Wandung der Ausnehmung des Grundkörpers 3 einzugreifen.

Vorzugsweise werden durch die nach außen vorstehenden Klinken 5.1.8 in der Wandung der Steckhülse 5 Ausnehmungen 5.1.6 freigegeben, in die Vorsprünge 7.1 des Löseorgans 7 eingreifen können, um den Verschiebeweg des Löseorgans 7 vom Fixierelement 6 weg zu begrenzen.

Fig. 6 zeigt schematisch ein weiteres Ausführungsbeispiel eines Steckeinsatzes 1.

Der wesentliche Unterschied zu den zuvor beschriebenen Ausführungsbeispielen besteht darin, dass der Steckeinsatz 1 mittels einer Pressverbindung im Grundkörper 3 fixiert wird. Dabei ist an der Steckhülse 5 außenumfangsseitig zumindest eine Rippe 5.1.7 vorgesehen, die mit einer innenumfangsseitigen Fläche des Grundkörpers 3 zusammenwirkt und durch Kraftschluss die Steckhülse 5 im Grundkörper 3 sichert.

Wie zuvor bereits in Bezug auf die Figuren 1 bis 4 beschrieben, kann die Steckhülse 5 eine Sicke 5.1.1 aufweisen, in der das Fixierelement 6 randseitig gehalten ist. Die Rippe 5.1.7, mittels der die Fixierung der Steckhülse 5 im Grundkörper 3 erfolgt, kann durch den Außenwandabschnitt der Steckhülse 5 im Bereich der Sicke 5.1.1 gebildet werden, d.h. durch die sich durch Ausformung der Sicke 5.1.1 außenumfangsseitig bildende Wulst. Alternativ kann auf Höhe der Sicke 5.1.1 außenumfangsseitig eine zusätzliche Kontur vorgesehen sein, die die Rippe 5.1.7 bildet. Auch andere oder weitere Konturierungen zur Gestaltung einer Pressverbindung mit dem Grundkörper 3 sind möglich.

Der Grundkörper 3 kann innenumfangsseitig eine Ausnehmung oder Hinterschneidung aufweisen, in die die zumindest eine Rippe 5.1.7 eintauchen kann, um auch einen Formschluss zwischen der Steckhülse 5 und dem Grundkörper 3 zu erreichen. Alternativ kann die Rippe 5.1.7 dazu ausgebildet sein, einen Presssitz an einer nut- bzw. hinterschneidungsfreien, glatten Wandung der Ausnehmung des Grundkörpers 3 herzustellen.

Fig. 8 bis 10 zeigen weitere Ausführungsformen eines Steckeinsatzes 1, der zur Verwendung in einem metallischen Grundkörper 3 vorgesehen ist und in diesem mittels Umbördeln des Randbereichs 3.1 der Ausnehmung des Grundkörpers 3 fixiert ist.

Nachfolgend werden die Unterschiede der Ausführungsformen des Steckeinsatzes 1 gemäß den Figuren 8 bis 10 gegenüber der Ausführungsform der Figuren 1 und 2 beschrieben. Im Übrigen gelten die zuvor beschriebenen technischen Merkmale der Ausführungsform der Figuren 1 und 2 auch für die Ausführungsformen gemäß den Figuren 8 bis 10.

Der wesentliche Unterschied des Steckeinsatzes 1 der Figuren 8 bis 10 gegenüber dem in den Figuren 1 und 2 gezeigten Steckeinsatz 1 besteht darin, dass das Kragenelement 8 eine Anlagefläche aufweist, die mit dem umgebördelten Randbereich 3.1 des Grundkörpers 3 zusammenwirkt so dass eine axial wirkende Haltekraft auf den Steckeinsatz 1 ausgeübt wird, d.h. der Steckeinsatz 1 kann dadurch, dass der umgebördelte Randbereich 3.1 das Kragenelement 8 zumindest partiell übergreift, nicht aus dem Grundkörper 3 herausgelöst werden.

Fig. 8 zeigt eine Ausführungsform eines Steckeinsatzes 1, bei dem das Kragenelement 8 aus einem Flachmaterial gebildet ist, das mittels eines Stanz-Biege-Prozess zu einem ringförmigen Element umgeformt ist. Das Kragenelement 8 weist eine ringartige Form auf und ist wiederum auf das freie Ende des Hülsenabschnitts 5.1 aufgesteckt, und zwar derart, dass ein den oberen Rand des Hülsenabschnitts 5.1 übergreifender Anschlagsabschnitt 8.3 in dem Durchführkanal DK zu liegen kommt und dadurch eine Anschlagsfläche für das Löseorgan 7 bildet.

Das Kragenelement 8 kann außenseitig beispielsweise eine Schrägfläche aufweisen, die vorzugsweise eine in Richtung des Kragen 7b des Löseorgans 7 konisch zulaufende, umfangsseitig um das Kragenelement 8 herum verlaufende Umfangsfläche ist. Die Schrägfläche ist dazu ausgebildet, mit dem umgebördelten Randbereich 3.1 des Grundkörpers 3 zusammenzuwirken, um diesen dadurch axial im Grundkörper 3 zu fixieren.

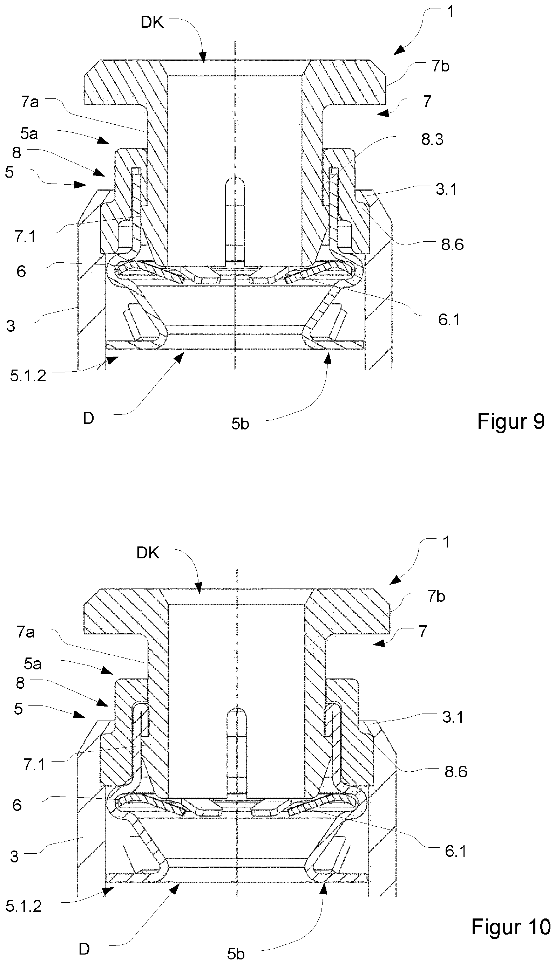

Fig. 9 zeigt ein weiteres Ausführungsbeispiel eines Steckeinsatzes 1, der durch einen umgebördelten Randbereich 3.1 im Grundkörpers 3 fixiert ist.

Das ringartig ausgebildete Kragenelement 8 ist beispielsweise mittels Metallpulverspritzgießen (MIM: Metal Injection Molding) hergestellt. Die Herstellung des Kragenelements 8 mittels Metallpulverspritzgießen bietet den Vorteil, dass ein hochstabiles Kragenelement 8, das das freie Ende des Hülsenabschnitts 1 übergreift und dabei eine hohe Stabilität aufweist, kostengünstig herstellbar ist.

Das Kragenelement 8 weist im gezeigten Ausführungsbeispiel außenseitig eine Schulter 8.6 auf, die dazu ausgebildet ist, von einem umgebördelten Randbereich 3.1 des Grundkörpers 3 übergriffen zu werden, um die Fixierung des Steckeinsatzes 1 im Grundkörper 3 zu erreichen.

Radial innenseitig weist das Kragenelement 8 wiederum einen Anschlagsabschnitt 8.3 auf, mittels dem ein unerwünschtes Herauslösen des Löseorgans 7 aus dem Steckeinsatz 1 verhindert wird.

Fig. 10 zeigt ein nochmals weiteres Ausführungsbeispiel eines Steckeinsatzes 1, bei dem der Steckeinsatz 1 durch einen umgebördelten Randbereich 3.1 im Grundkörper 3 fixiert ist.

Das ringartig ausgebildete Kragenelement 8 ist beispielsweise als Drehteil aus einem Metall hergestellt und weist außenseitig eine Schulter 8.6 auf, die dazu ausgebildet ist, von einem umgebördelten Randbereich 3.1 des Grundkörpers 3 übergriffen zu werden, um die Fixierung des Steckeinsatzes 1 im Grundkörper 3 zu erreichen.

Das Kragenelement 8 weist eine innenseitige Stufung auf, die eine Anlage für den freiendseitigen Rand des Hülsenabschnitts 5.1 bildet. Aus fertigungstechnischen Gründen kann es bei einem als Drehteil hergestellten Kragenelement 8 vorteilhaft sein, dass das Kragenelement 8 selbst keinen Anschlagabschnitt für das Löseorgan 7 aufweist. Vorteilhafterweise sind im Bereich des freien Endes des Hülsenabschnitts 5.1 Anschlagabschnitte für das Löseorgan 7 vorgesehen. Diese können beispielswiese durch ein Umbördeln des Randbereichs des freien Endes des Hülsenabschnitts 5.1 gebildet werden.

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

### Bezugszeichenliste

- 1: Steckeinsatz
- 2: rohrförmiges Element
- 3: Grundkörper
- 4: Dichtelement
- 5: Steckhülse
- 5A, 5B: Wandungselement
- 5a: erstes freies Ende
- 5b: zweites freies Ende
- 5.1: Hülsenabschnitt
- 5.1a: erster Bereich
- 5.1b: zweiter Bereich
- 5.1c: dritter Bereich
- 5.1d: vierter Bereich
- 5.1.1: Sicke
- 5.1.2: Flansch
- 5.1.3: Krallen
- 5.1.4: Laschen
- 5.1.5: Klinke
- 5.1.6: Ausnehmung
- 5.1.7: Rippe
- 5.1.8: Klinke
- 5.1.9: Arretierklinke
- 5.1.10: Schulter
- 5.2: Kragenabschnitt
- 6: Fixierelement
- 6.1: Krallen
- 7: Löseorgan
- 7a: Einschubabschnitt
- 7b: Kragen
- 7.1: Vorsprung
- 7.2: Längsschlitz
- 8: Kragenelement
- 8.1: Oberseite
- 8.2: Wandungsabschnitt
- 8.3: Anschlagsabschnitt
- 8.4: Ausnehmung

- D: Durchführöffnung
- DK: Durchführkanal
- E: Einführöffnung
- LA: Längsachse

## Patentansprüche

1. Steckeinsatz ausgebildet zur Einbringung in einen Grundkörper (3), wobei der Steckeinsatz (1) zur lösbaren Kopplung eines rohrförmigen Elements (2) mit dem Grundkörper (3) ausgebildet ist, wobei der Steckeinsatz (1) eine Steckhülse (5), ein Fixierelement (6) und ein Löseorgan (7) aufweist, wobei das Fixierelement (6) zur lösbaren Fixierung eines über eine Einführöffnung (E) eingeschobenen, rohrförmigen Elements (2) in der Steckhülse (5) ausgebildet ist und das Löseorgan (7) mit dem Fixierelement (6) derart zusammenwirkt, dass durch eine axiale Verschiebung des Löseorgans (7) relativ zur Steckhülse (5) die Fixierung des rohrförmigen Elements (2) gelöst wird, wobei die Steckhülse (5) einen Hülsenabschnitt (5.1) umfasst, der aus zumindest einem Wandungselement (5A, 5B) gebildet ist, wobei das Wandungselement (5A, 5B) durch Stanzen und Biegen eines metallischen Flachmaterialabschnitts zu einem schalenartigen oder umfangsseitig geschlossenen Element gebildet ist, wobei die Steckhülse (5) an einem der Einführöffnung (E) gegenüberliegenden zweiten freien Ende (5b) einen Flansch (5.1.2) zur Ausbildung einer Anlagefläche für ein Dichtelement (4) aufweist, mittels dem der Übergang zwischen dem rohrförmigen Element (2) und dem Grundkörper (3) abgedichtet wird, wobei:
- einstückig mit der Steckhülse (5) gebildete Fixiermittel zur Fixierung der Steckhülse in dem Grundkörper vorgesehen sind, wobei die Fixiermittel zur Fixierung des Steckeinsatzes (1) in dem Grundkörper (3) vorgesehen sind und wobei die Fixiermittel
o durch mehrere an der Steckhülse (5) umfangsseitig verteilt angeordnete Krallen (5.1.3) gebildet werden und die Krallen (5.1.3) im Bereich des Flanschs (5.1.2) vorgesehen sind;
o oder durch zumindest eine Rippe (5.1.7) gebildet werden, wobei die Steckhülse (5) eine Sicke (5.1.1) aufweist, in der das Fixierelement (6) randseitig gehalten ist und wobei der Außenwandabschnitt der Steckhülse (1) im Bereich der Sicke (5.1.1) die zumindest eine Rippe (5.1.7) bildet oder die Rippe (5.1.7) aufweist; oder
- wobei die Steckhülse (5) dazu ausgebildet ist, durch Umformen eines Randbereichs (3.1) des Grundkörpers (3) im Grundkörper (3) fixiert zu werden, wobei die Steckhülse (5) an einem ersten freien Ende (5a), an dem die Einführöffnung (E) für das rohrförmige Element (2) vorgesehen ist, einen Kragenabschnitt (5.2) aufweist, der durch ein separates Kragenelement (8) gebildet ist, wobei das Kragenelement (8) außenumfangsseitig eine Schrägfläche (8.5) oder eine Schulter (8.6) aufweist, die dazu ausgebildet ist, zur Fixierung des Steckeinsatzes (1) im Grundkörper (3) von einem umgeformten Randbereich (3.1) des Grundkörpers (3) umgriffen zu werden.

2. Steckeinsatz nach Anspruch 1, **dadurch gekennzeichnet, dass** der Flansch (5.1.2) mehrere Flanschsegmente umfasst, die bezogen auf eine Längsachse (LA) des Steckeinsatzes (1) radial nach außen abstehen und in Umfangsrichtung zueinander beabstandet angeordnet sind und dass die Krallen (5.1.3) umfangsseitig verteilt in den sich zwischen den Flanschsegmenten bildenden Zwischenräumen vorgesehen sind, und zwar jeweils eine oder mehrere Krallen (5.1.3) in einem sich zwischen zwei aufeinanderfolgenden Flanschsegmenten bildenden Zwischenraum.

3. Steckeinsatz nach einem der vorhergehenden Ansprüche, **dadurch gekennzeichnet, dass** der Hülsenabschnitt (5.1) durch ein einziges gestanztes, umgeformtes und zu einem umfangsseitig geschlossenen Element zusammengebogenes Flachmaterialstück gebildet wird.

4. Steckeinsatz nach Anspruch 1 oder 2, **dadurch gekennzeichnet, dass** der Hülsenabschnitt (5.1) zumindest zwei gestanzte, umgeformte und schalenförmig gebogene Flachmaterialstücke als Wandungselemente umfasst, die zu einem umfangsseitig geschlossenen Hülsenabschnitt (5.1) zusammengefügt sind.

5. Steckeinsatz nach einem der vorhergehenden Ansprüche, **dadurch gekennzeichnet, dass** das Kragenelement (8) ein ringartig ausgebildetes Element aus einem Flachmaterial ist, das einen von einer Oberseite (8.1) winklig abstehenden, außenumfangsseitig geschlossenen Wandungsabschnitt (8.2) aufweist.

6. Steckeinsatz nach einem der vorhergehenden Ansprüche, **dadurch gekennzeichnet, dass** das Kragenelement (8) innenumfangsseitig mehrere Anschlagsabschnitte (8.3) zur Begrenzung des axialen Verschiebewegs des Löseorgans (7) aufweist.

7. Steckeinsatz nach einem der vorhergehenden Ansprüche, **dadurch gekennzeichnet, dass** das Fixierelement (6) ein in der Steckhülse (5) fixierter scheibenförmiger Krallenring ist, der innenumfangsseitig eine Vielzahl von reversibel verbiegbaren Krallen (6.1) zur Fixierung des rohrförmigen Elements (2) aufweist.

8. Steckeinsatz nach Anspruch 7, **dadurch gekennzeichnet, dass** das Fixierelement (6) im Übergangsbereich zwischen einem ringförmigen Abschnitt des Krallenrings und den Krallen (6.1) eine Wölbung aufweist, deren konvexe Seite in Richtung der Einführöffnung (E) weist.

9. Steckeinsatz nach einem der vorhergehenden Ansprüche, **dadurch gekennzeichnet, dass** der Hülsenabschnitt (5.1) zwischen einem Mittenbereich, in dem das Fixierelement (6) gehalten ist, und einem der Einschuböffnung (E) gegenüberliegenden zweiten freien Ende (5b) der Steckhülse (5) trichterförmig zulaufend ausgebildet ist.

## Claims

1. Plug-in insert designed for insertion into a main body (3), wherein the plug-in insert (1) is designed for the releasable coupling of a tubular element (2) in the main body (3), wherein the plug-in insert (1) has a plug-in sleeve (5), a fixing element (6) and a release member (7), wherein the fixing element (6) is designed for the releasable fixing of a tubular element (2), inserted via an insertion opening (E), in the plug-in sleeve (5) and the release member (7) cooperates with the fixing element (6) in such a way that the fixing of the tubular element (2) is released by an axial movement of the release member (7) relative to the plug-in sleeve (5), wherein the plug-in sleeve (5) comprises a sleeve portion (5.1) formed of at least one wall element (5A, 5B), wherein the wall element (5A, 5B) is formed by stamping and bending a metallic flat material portion into a shell-shaped or circumferentially closed member, wherein the plug-in sleeve (5) has, at a second free end (5b), opposite to the insertion opening (E), a flange (5.1.2) for forming a contact surface for a sealing element (4), by means of which the transition between the tubular element (2) and the main body (3) is sealed, wherein:
- fixing members formed integrally with the plug-in sleeve (5) are provided for fixing the plug-in sleeve in the main body, wherein the fixing members are provided for fixing the plug-in insert (1) in the main body (3), and wherein the fixing members
∘ are formed by a plurality of claws (5.1.3) arranged so as to be distributed circumferentially over the plug-in sleeve (5) and the claws (5.1.3) are provided in the region of the flange (5.1.2)
∘ or by at least one rib (5.1.7), wherein the plug-in sleeve (5) has a bead (5.1.1) in which the fixing element (6) is held at the edge and wherein the outer wall portion of the plug-in sleeve (1) forms, in the region of the bead (5.1.1), the at least one rib (5.1.7) or includes the rib (5.1.7); or
- wherein the plug-in sleeve (5) is designed to be fixed in the main body (3) by forming an edge region (3.1) of the main body (3), wherein the plug-in sleeve (5) has, at a first free end (5a) at which the insertion opening (E) for the tubular element (2) is provided, a collar portion (5.2.) which is formed by a separate collar element (8), wherein the collar element (8) has, on the outer circumferential side, an inclined surface (8.5) or a shoulder (8.6) which is designed to be embraced by a formed edge region (3.1) of the main body (3) in order to fix the plug-in insert (1) in the main body (3).

2. Plug-in insert according to claim 1, **characterized in that** the flange (5.1.2) comprises a plurality of flange segments which project radially outwards with respect to a longitudinal axis (LA) of the plug-in insert (1) and are arranged spaced apart from one another in the circumferential direction, and **in that** the claws (5.1.3) are provided so as to be distributed circumferentially in the intermediate spaces forming between the flange segments, namely one or more claws (5.1.3) in each case in an intermediate space forming between two successive flange segments.

3. Plug-in insert according to any one of the preceding claims, **characterized in that** the sleeve portion (5.1) is formed by a single piece of flat material which is stamped, formed and bent together to form a circumferentially closed element.

4. Plug-in insert according to claim 1 or 2, **characterized in that** the sleeve portion (5.1) comprises at least two stamped, shaped and shell-shaped bent pieces of flat material as wall elements, which are joined together to form a circumferentially closed sleeve portion (5.1).

5. Plug-in insert according to any one of the preceding claims, **characterized in that** the collar element (8) is a ring-like element made of a flat material, which has a wall portion (8.2) projecting at an angle from an upper side (8.1) and being closed on the outer circumferential side.

6. Plug-in insert according to any one of the preceding claims, **characterized in that** the collar element (8) has on the inner circumferential side a plurality of stop portions (8.3) for confining the axial movement path of the release member (7).

7. Plug-in insert according to any one of the preceding claims, **characterized in that** the fixing element (6) is a disk-shaped claw ring which is fixed in the plug-in sleeve (5) and has, on the inner circumferential side, a plurality of reversibly bendable claws (6.1) for fixing the tubular element (2).

8. Plug-in insert according to claim 7, **characterized in that** the fixing element (6) has, in the transition region between an annular portion of the claw ring and the claws (6.1), a curvature, the convex side of which points in the direction of the insertion opening (E).

9. Plug-in insert according to any one of the preceding claims, **characterized in that** the sleeve portion (5.1) is designed to taper in a funnel shape between a central region, in which the fixing element (6) is held, and a second free end (5b) of the plug-in sleeve (5) opposite to the insertion opening (E).

## Revendications

1. Insert enfichable conçu pour être inséré dans un corps de base (3), l'insert enfichable (1) étant conçu pour le couplage amovible d'un élément tubulaire (2) avec le corps de base (3), l'insert enfichable (1) comprenant une douille d'enfichage (5), un élément de fixation (6) et un organe de desserrage (7), dans lequel l'élément de fixation (6) est conçu pour la fixation amovible d'un élément tubulaire (2), inséré par une ouverture d'insertion (E), dans la douille d'enfichage (5), et l'organe de desserrage (7) coopère avec l'élément de fixation (6) de telle sorte que la fixation de l'élément tubulaire (2) est desserrée par un déplacement axial de l'organe de desserrage (7) par rapport à la douille d'enfichage (5), la douille d'enfichage (5) comprend un tronçon de douille (5.1) qui est formé d'au moins un élément de paroi (5A, 5B), l'élément de paroi (5A, 5B) est formé par poinçonnage et pliage d'un tronçon en matériau plat métallique pour former un élément en forme de coque ou fermé sur sa périphérie, et, à une deuxième extrémité libre (5b) opposée à l'ouverture d'insertion (E), la douille d'enfichage (5) présente une bride (5.1.2) destinée à former une surface d'appui pour un élément d'étanchéité (4) permettant de rendre étanche la transition entre l'élément tubulaire (2) et le corps de base (3), sachant que :
- il est prévu des moyens de fixation, réalisés d'un seul tenant avec la douille d'enfichage (5), destinés à fixer la douille d'enfichage dans le corps de base, les moyens de fixation étant prévus pour fixer l'insert enfichable (1) dans le corps de base (3), et les moyens de fixation
∘ étant formés par plusieurs griffes (5.1.3) disposées en étant réparties sur la périphérie de la douille d'enfichage (5), les griffes (5.1.3) étant prévues dans la zone de la bride (5.1.2) ;
∘ ou étant formés par au moins une nervure (5.1.7), la douille d'enfichage (5) présentant une moulure (5.1.1) dans laquelle l'élément de fixation (6) est maintenu du côté bord, et le tronçon de paroi extérieure de la douille d'enfichage (1) formant ladite au moins une nervure (5.1.7) ou comprenant la nervure (5.1.7) dans la zone de la moulure (5.1.1) ; ou
- la douille d'enfichage (5) est conçue pour être fixée dans le corps de base (3) par mise en forme d'une zone de bord (3.1) du corps de base (3), et, à une première extrémité libre (5a) où est prévue l'ouverture d'insertion (E) pour l'élément tubulaire (2), la douille d'enfichage (5) présente un tronçon de collerette (5.2) qui est formé par un élément de collerette séparé (8), l'élément de collerette (8) présentant du côté de sa périphérie extérieure une surface oblique (8.5) ou un épaulement (8.6) qui est conçu(e) pour être entouré(e) par une zone de bord (3.1), mise en forme, du corps de base (3), afin de fixer l'insert enfichable (1) dans le corps de base (3).

2. Insert enfichable selon la revendication 1,
**caractérisé en ce que** la bride (5.1.2) comprend plusieurs segments de bride qui font saillie radialement vers l'extérieur par rapport à un axe longitudinal (LA) de l'insert enfichable (1) et qui sont disposés à distance les uns des autres dans la direction périphérique, et
**en ce que** les griffes (5.1.3) sont disposées en étant réparties sur la périphérie dans les espaces intermédiaires qui se forment entre les segments de bride, à savoir une ou plusieurs griffes (5.1.3) dans un espace intermédiaire qui se forme entre deux segments de bride successifs.

3. Insert enfichable selon l'une des revendications précédentes,
**caractérisé en ce que** le tronçon de douille (5.1) est formé par une unique pièce en matériau plat découpée, mise en forme et pliée pour former un élément fermé sur sa périphérie.

4. Insert enfichable selon la revendication 1 ou 2,
**caractérisé en ce que** le tronçon de douille (5.1) comprend au moins deux pièces en matériau plat découpées, mises en forme et pliées en forme de coque à titre d'éléments de paroi qui sont assemblés pour former un tronçon de douille (5.1) fermé sur sa périphérie.

5. Insert enfichable selon l'une des revendications précédentes, **caractérisé en ce que** l'élément de collerette (8) est un élément réalisé en forme d'anneau en un matériau plat, qui présente un tronçon de paroi (8.2) fermé du côté de sa périphérie extérieure et faisant saillie angulairement d'une face supérieure (8.1).

6. Insert enfichable selon l'une des revendications précédentes, **caractérisé en ce que** l'élément de collerette (8) présente, du côté de sa périphérie intérieure, plusieurs tronçons de butée (8.3) destinés à limiter la course de déplacement axial de l'organe de desserrage (7).

7. Insert enfichable selon l'une des revendications précédentes, **caractérisé en ce que** l'élément de fixation (6) est un anneau à griffes en forme de rondelle, fixé dans la douille d'enfichage (5), qui présente, du côté de sa périphérie intérieure, une pluralité de griffes (6.1) pouvant être déformées de manière réversible, destinées à fixer l'élément tubulaire (2).

8. Insert enfichable selon la revendication 7,
**caractérisé en ce que** l'élément de fixation (6) présente, dans la zone de transition entre un tronçon annulaire de l'anneau à griffes et les griffes (6.1), un bombement dont le côté convexe est dirigé vers l'ouverture d'insertion (E).

9. Insert enfichable selon l'une des revendications précédentes, **caractérisé en ce que** le tronçon de douille (5.1) est réalisé de manière à converger en forme d'entonnoir entre une zone centrale, dans laquelle l'élément de fixation (6) est maintenu, et une deuxième extrémité libre (5b) de la douille d'enfichage (5) opposée à l'ouverture d'insertion (E).
